# EUROPEAN PATENT SPECIFICATION

(11) **EP 1 989 879 B1**
(45) Date of publication and mention of the grant of the patent: **19.10.2011**
(21) Application number: 07704564.9
(22) Date of filing: 13.02.2007
(51) Int. Cl.: H04N 7/173

(54) **INTERACTIVE SERVICES**
INTERAKTIVE DIENSTE
SERVICES INTERACTIFS

(30) Priority: 15.02.2006 GB 0603053; 28.06.2006 IE 20060484
(43) Date of publication of application: 12.11.2008
(73) Proprietor: InTime Media (Ireland) Limited, Dublin 2 (IE)
(72) Inventor: ELLISON, Julian, County Mayo (IE); GREGORY, Mark, County Mayo (IE); SIMPSON, Gordon, London W9 1AY (GB); JANÉ, Xavier, Catalunya (ES)
(74) Representative: Johansson, Anna Olivia
(86) International application number: PCT/EP2007/051392
(87) International publication number: WO 2007/093597

(56) References cited:
- WO-A1-01/65743
- US-A1- 2002 107 591
- US-A1- 2003 186 648
- US-A1- 2005 060 232

## Description

### Technical Field

This invention relates to interactive services. Particularly, but not exclusively, it relates to a mobile device that provides a service synchronised with events in an audio stream from a broadcast receiver.

### Background of the Invention

Providers of content such as information, entertainment or advertising, are constantly seeking new and improved ways of interacting with their audience. Conventional television and radio provide limited opportunities for interaction with viewers or listeners, often based around a television viewer pressing buttons on a remote control in response to visual cues appearing on the screen.

US2005/060232 A1 discloses a device for detecting a broadcast content identification signal in the form of an inaudible high frequency signal that identifies information about broadcast content.

WO01/65743 A1 discloses a toy with a microphone.

US2002/107591 A1 discloses a method of transmitting data related to a broadcast from a server to a user device while the user is experiencing the broadcast.

The present invention aims to provide alternative and additional ways for users to interact with content presented to them.

### Summary of the Invention

The invention is defined in claims 1 to 14. There is provided a device comprising a microphone for receiving an audio stream, means for searching for a pattern in the received audio stream corresponding to a stored signature and means for executing a function in response to detecting the pattern.

The audio stream may be derived from a broadcast signal received by a television receiver and the function may be related to broadcast content.

The device may further comprise means for receiving data from a remote server, the data comprising signature data and a broadcast schedule to be stored at the device.

The audio stream may be an audio stream associated with a broadcast advertisement and the function may include downloading information related to a product advertised during the broadcast advertisement. Alternatively, the function may include providing a user with a reward or other benefit for watching a broadcast advertisement during a commercial break.

The audio stream may be an audio stream associated with a broadcast quiz show or a live sporting event and the function may include the termination of a time period for entering an answer to a question or entering a bet on the outcome of the event.

Embodiments of the invention therefore provide an application synchronised with a broadcast. Moreover, the means of synchronization avoids any errors in synchronisation due to the discrepancies in latencies associated with digital satellite, terrestrial and cable broadcasts, which may be delayed by, for example, up to six or more seconds compared with analogue broadcasts.

Moreover, the application does not require a modification of the broadcast signal. Accordingly, the services can, if necessary, be created and supplied without the involvement of the broadcast production staff.

There is further provided a server comprising a memory for storing broadcast service data including a schedule of future broadcasts and signatures corresponding to patterns in an audio stream being part of said broadcast content; a processor for selecting data from said broadcast service data for transmission to a device; and a transceiver for transmitting said selected data to the device.

The memory may be configured to store a user profile associated with said device and the processor may be configured to select said selected data in dependence on the user profile. Moreover, there is provided a system comprising a server for storing data including a schedule of broadcasts and a signature corresponding to a pattern in an audio stream associated with broadcast content; a television receiver for receiving said broadcast content; and a device operable to download said data from said server; said device comprising a microphone for receiving said audio stream; means for searching for a pattern in the received audio stream corresponding to said signature; and means for executing a function in response to detecting said pattern.

Yet further, there is provided a computer program product stored on a computer readable storage medium and comprising instructions for performing a service on a device associated with content in a broadcast signal, wherein the computer product is arranged for implementation in a device such that, when the computer program is executed therein, the device is arranged to: process a received audio stream; search for a pattern in the received audio stream corresponding to a stored signature; and execute a function in response to detecting the pattern.

Additionally, there is provided a method for performing an application in a device, the application being synchronised with events in an audio stream of a broadcast; the method comprising receiving the audio stream in the device; searching for a pattern in the received audio stream corresponding to a stored signature; and executing a function in response to detecting the pattern.

### Brief Description of Drawings

Figure 1 shows a system according to the invention;
Figure 2 is a schematic diagram of circuitry for a mobile telephone;
Figure 3 is a schematic diagram of the data structure of the data required to perform the services according to the invention;
Figure 4 illustrates the main components of a browser according to the invention;
Figure 5 illustrates a process for obtaining and storing data on a server according to the invention;
Figure 6 illustrates a process of downloading the main application program of the invention to a mobile telephone;
Figure 7 illustrates a process of obtaining data required to perform a service associated with a broadcast;
Figures 8 and 9 illustrate processes of performing a service associated with a broadcast; and
Figure 10 illustrates an example of a service according to the invention.

### Detailed Description

### System structure

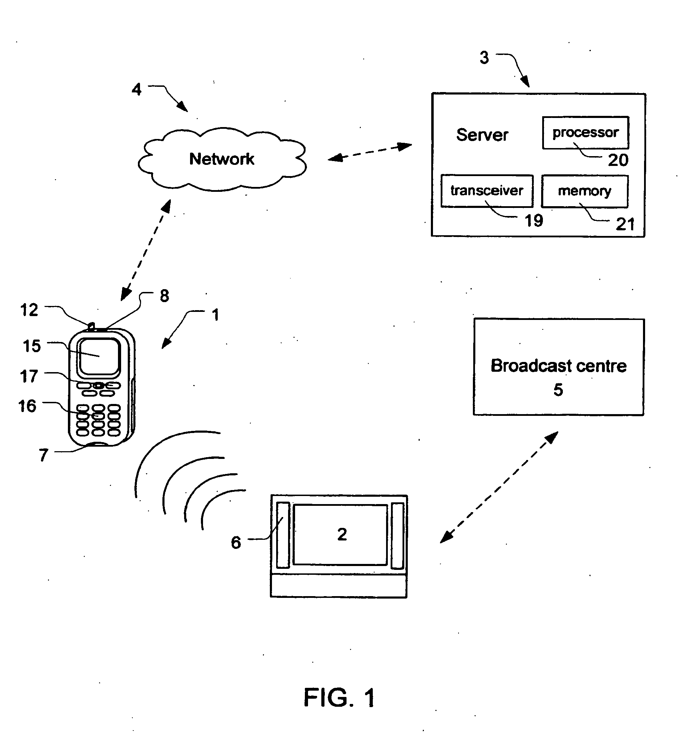

Referring to Figure 1, a system according to the invention comprises a user terminal 1, a broadcast receiver 2 such as a television and a server 3 that communicates with the user terminal 1 via one or more conventional communication networks 4, for example using TCP/IP over GPRS. The broadcast receiver 2 receives broadcast signals from a broadcast centre 5 and outputs audio signals via speakers 6 in a conventional way for reception by the terminal 1. The broadcast signals may be either digital or analogue and may be delivered to the television receiver 2 by, for example, cable, satellite, the Internet or by conventional terrestrial transmission means.

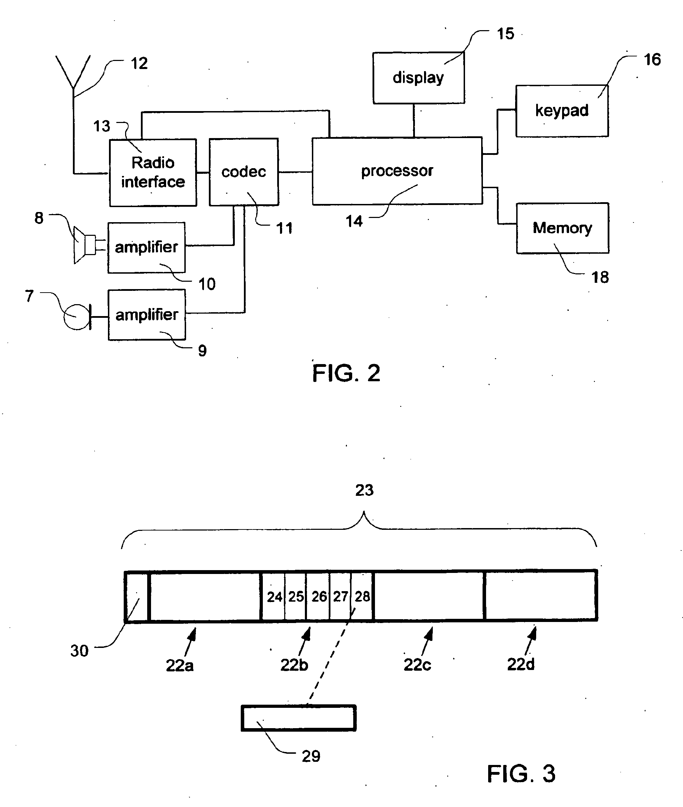

The user terminal 1 may be a conventional mobile telephone handset 1 as shown in Figures 1 and 2. The mobile telephone handset 1 comprises a microphone 7 and a speaker 8, connected via respective amplifiers 9, 10 to a codec 11. The codec 11 is in turn connected to an antenna 12 via a radio interface 13, and to a processor 14 for controlling operation of the handset 1. The handset 1 further includes a display 15, such as an LCD display, and a keypad 16 including soft keys 17 that can be programmed to perform different functions. The handset 1 is also provided with memory 18.

The microphone 7 of the handset 1 is configured to pick up audio signals from the television receiver 2 and the handset 1 is configured to communicate via radio signals with the server 3, under the control of application software running on the handset 1, which operates, for example, under the Symbian™ operating system.

The server 3 comprises a transceiver 19 for transmitting and receiving radio signals over the communications network 4 to the handset 1, including but not limited to transmission by TCP/IP over GPRS. The server also comprises a processor 20 and a memory 21. The memory preferably comprises a database for storing a user profile associated with the handset 1.

### Software structure

The application software comprises two components. The first component includes a main application program providing code for a browser to be run in the mobile telephone 1. The second component includes instructions and data for particular services handled by the browser of the main application. A service is associated with a set of instructions related to the content of a specific broadcast. Since new services are generated to support new scheduled broadcasts, the second component of the software needs to be constantly updated. The main application browser, on the other hand, only needs to be downloaded to the mobile telephone once.

The services handled by the browser include events that are synchronised with events in the broadcast. Thus, the browser, and therefore the first component of the software, comprises software for triggering the service events in response to detecting the events in the broadcast. The data for identifying events may change over time as new events are scheduled and, consequently, the data for identifying distinct events is included in the second component. The first and the second component of the software can be implemented in a number of ways. One example of an implementation is described below and should be considered exemplary rather than limiting.

A service runs for a fixed period of time, typically equivalent to the duration of a broadcast programme or a broadcast advertisement or promotion shown on television. The service is synchronised with the broadcast by means of stored signatures that can be matched to patterns in the audio stream of the broadcast. Different parts of the service, which will be referred to as states below, are triggered in response to the detection of different signatures.

A state corresponds to a time interval of a service and only one state can be active at a time. The states are activated or deactivated in response to, for example, the detection of a pattern in the audio stream, the end of a time period set by a timer or a user action. Each state is represented by a state object 22a-22d stored in memory as shown in Figure 3. Together, the state objects make up the data required for a service 23. Each state object contains logic 24, a user interface event handler 25 and associated visual content 26. The state objects may further comprise code 27 defining the triggers for the activation and the deactivation of the state and a reference 28 to a stored signature. The signature may be stored as a signature object 29 in memory 18.

A stored signature object 29 is, for example, generated from a 4 second 16-bit linear PCM file with sample rate of 8000bps as an array of 4000 Booleans. Each Boolean value represents whether or not sound was present during a particular interval in the original audio. Each interval is 1/1000^{th} of a second. However, any other suitable data format and structure may be used for the signature. Each stored signature is uniquely associated with a state object.

Each complete service 23 also comes with time data 30 indicating at approximately what time the associated broadcast is scheduled to take place, such that the processor of the mobile telephone 1 can start the service at the indicated time.

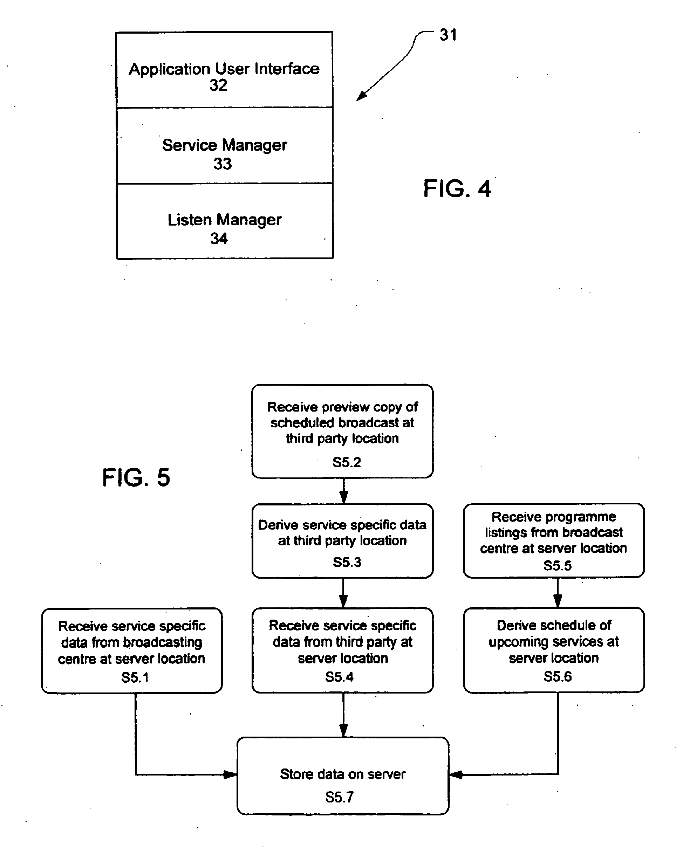

The main application program, on the other hand, comprises a generic browser and any additional data required for a particular type and brand of mobile telephone. With reference to Figure 4, the browser 31 comprises an application user interface 32, a service manager 33 and a listen manager 34. The application user interface 32 provides the graphical user interface to the application. It renders the visual content associated with each state object in the display 15 of the mobile handset. The service manager 33, on the other hand, hosts one or more services, is responsible for the activation and deactivation of hosted services, and reports the state of each service to the user interface. Finally, the listen manager 34 is responsible for listening to live audio input from the microphone of the mobile telephone, for mapping the live audio into a form more suitable for audio recognition and for performing comparisons between the mapped live audio and the signatures stored in the data memory.

The conversion of the live audio input to a format more suitable for comparison with the stored signatures can be handled in any well-known manner, for example using software. The software records a live signature and compares it to the stored signature. Each live signature may consist of 4 seconds of audio and a new live signature may be recorded and compared to the stored signatures in memory every 1/1000^{th} of a second.

### Operation

The principles of operation of the invention will now be described in more detail.

With reference to Figure 5, the service specific data and the schedule of upcoming services may be loaded on the server 3 in a number of ways. The service specific data may be received directly from the broadcasting centre 5, step S5.1, if the broadcasting centre is responsible for the services. Alternatively, the service may be supplied by a third party who has arranged a deal with the producers of the broadcasts. The third party may then receive a preview copy of the scheduled broadcast, step S5.2, and obtain the relevant signatures and time data from the preview copy, step S5.3. The service specific data is then received at the server location from the third party at step S5.4. The schedule of upcoming services can be generated from a broadcast listing and the service specific data obtained. The broadcast listings may be received from the broadcast centre 5 at step S5.5 and the scheduled times of all broadcasts for which service data exists may be extracted from the listings to generate the schedule at step S5.6. The data and scheduled are loaded and stored on the server at step S5.7.

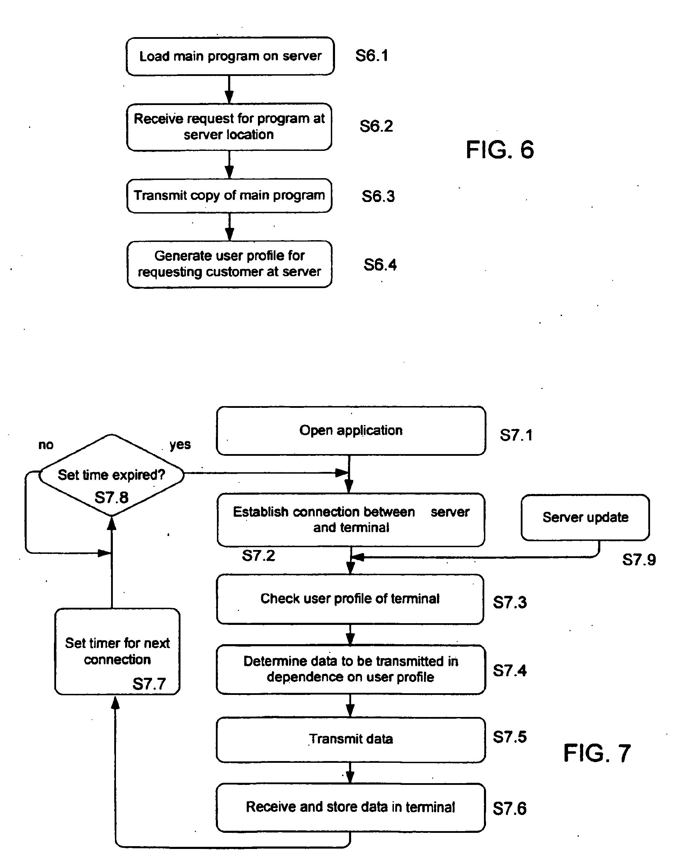

With reference to Figure 6, the main application program for the mobile telephone is also stored at the server, step S6.1, and can be downloaded on request by a mobile telephone. For example, the application may be promoted to first time users by television or via printed matter and a Short Message Service (SMS) short code may be supplied for downloading the application. When the viewer sends a text message to the short code using a mobile telephone 1, a request for the application is transmitted to and received by the server 3, step S6.2, and in return the application program is transmitted to the mobile telephone 1, step S6.3. The application may be transmitted by multimedia messaging service (MM.S) messages. The server 3 may further generate a new user profile, step S6.4, for the requesting mobile telephone in memory in response to receiving the request.

Other ways of transferring the application program to the mobile telephone include but are not limited to downloading it over the Internet from a separate server or computer, either via a wired or wireless connection, or by Bluetooth™ from another mobile telephone or personal computer. If the program is not downloaded directly from the server 3, the application program may be configured to send a message to the server 3 when the application is launched for the first time in order to create a new user profile in the memory 21 of the server.

After the main application program has been stored on the mobile telephone, a user can launch the application by using a menu in a graphical user interface provided by an operating system of the mobile telephone. The option to activate the application may be provided via a link under the heading of entertainment.

The link may take the user to a menu providing the option to activate or deactivate the application.

When the application is activated for the first time, the mobile telephone establishes a connection to the server to download an up-to-date schedule of upcoming services and the data structures corresponding to the services. At this point, the user may be requested to input the types of services of interest to him. This data will be saved in the user profile at the server and it can be changed at a later date. The user profile is used to select what data to transmit to the mobile telephone. For example, the server may store data required for performing an upcoming betting service associated with a football match, but a particular user has only expressed an interest in services associated with quiz shows. As a result, the data required for the betting service is not transmitted to the mobile telephone.

The time of the last connection to the mobile telephone and data identifying the transmitted data files is further recorded in the user profile. Consequently, the next time the application is activated and a connection to the server is established, the server can check what data files have already been transmitted to the mobile telephone such that data already received by the mobile telephone is not re-transmitted.

After the server 3 has identified the data to be transmitted to the mobile telephone, the processor 20 of the server 3 generates a number of SMS messages comprising the identified data and transmits the SMS messages to the mobile telephone 1. The mobile telephone receives the SMS messages and automatically stores the data in memory 18. The use of SMS messages to transmit the data from the server 3 to the mobile telephone 1 is only one example of how the data can be transmitted. Other suitable means for transmitting the identified data can be used.

If the application according to the invention is open for an extended period of time, the mobile telephone may poll the server via a TCP/IP link over GPRS for updated data at regular intervals. Furthermore, if data for a service associated with a broadcast that is currently being shown or which is scheduled shortly is updated in the server, the server may attempt to establish connections to the mobile telephones in the system that have downloaded the relevant data, such that the data in the mobile telephones can be updated.

When the data required for a particular service has been downloaded, the processor of the mobile telephone checks the approximate start time of the broadcast associated with the next service and sets a timer for starting the service. At the start of the service, the listen manager 34 is instructed to start listening for patterns in the received audio stream that matches the stored signatures. The first state of the service is then activated. The function provided by the first state varies with the type of service and the content of the broadcast. As the broadcast proceeds, subsequent states of the service are activated and deactivated.

At the end of a service, the mobile telephone may collect any data received as a result of user interaction with the mobile telephone during the service. This data is then sent to the remote server 3 for processing.

The audio stream consequently provides a time-line with respect to which an application according to the invention can synchronise. The stored audio signatures provide the application with references against that time line. Consequently, there are two levels of synchronisation. The connection to the server and downloaded data provide an approximate synchronisation in time and the reception and processing of the audio stream provide a more exact synchronisation with the broadcast.

A process for downloading service specific data from a server will now be described in more detail with respect to Figure 7.

The application is launched at step S7.1 as a result of, for example, a user selecting a menu option in the graphical user interface of the mobile telephone. Alternatively, the application may launch automatically, when the mobile telephone is switched on. At step S7.2, the mobile telephone connects to the server. An attempt to connect to the server may be automatically triggered by the launch of the application. Alternatively, the attempt to connect may be triggered by a user action. At step S7.3, the server identifies the mobile telephone and checks the user profile associated with the mobile telephone. At step S7.4 the server determines the data to be sent to the mobile telephone in dependence on the user profile stored in memory and at step S7.5 the data is transmitted to the mobile telephone, preferable via SMS or MMS. At step S7.6, the data is received at the mobile telephone and stored in memory. The connection to the server may then be closed.

The mobile telephone is preferably configured to poll the server at regular intervals for any new data or scheduled services. Thus, at step S7.7 a timer is set to trigger a new connection to the server after a predetermined time period. The timer may be implemented by software that checks at regular intervals whether the time elapsed since the timer was set is equal to or longer than the predetermined time period. Tf the predetermined time period has not expired at step S7.8, the software continues to check the elapsed time. If the time period has expired, the process is repeated from step 57.2 to step S7.8. The timer may also be implemented using hardware or a combination of hardware and software as is well known in the art.

If the service specific data stored in the server 3 is updated during the broadcast associated with the service, for example if the broadcast is a live broadcast of a sports event and new state objects are generated and stored as a result of development in the live event, the updated data files need to be transmitted to the mobile telephone. Therefore, at step S7.9, the server 3 establishes a connection to the mobile telephone 1 and steps S7.3 to S7.8 are subsequently repeated.

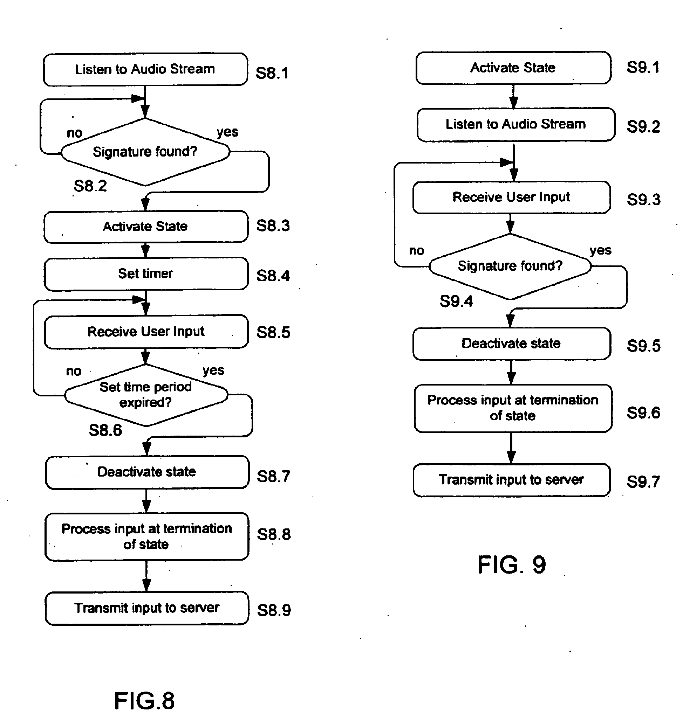

With reference to Figure 8, an example of a process of activating a state in response to the detection of a pattern in the audio stream will be described in more detail. The listen manager 34 starts listening at step S8.1. At step S8.2, the listen manager checks whether a sample of the audio signal matches a stored signature. If not, the listen manager continues to sample and compare the audio signal with stored signatures. If there is a match between the sampled signal and a stored pattern, a state is activated at step S8.3. The state may for example be related to a reward for a user watching an advertisement and the user may need to press a key to indicate its presence in order to obtain the reward. Thus, at step S8.4, a timer is set giving the viewer a fixed period for pressing the key before the state is deactivated and the viewer loses his chance to receive the reward.

At some time after the timer is set, the user presses the key and the browser recognises a received user input at step S8.5. The timer repeatedly checks whether the set time period has expired. If at step S8.6, the timer data shows that the elapsed time since the timer was set is equal to or longer than the set time, the state is deactivated, step S8.7. The processor analyses the received user input at step S8.8 and transmits it to the server at step S8.9 for the server to complete the transaction.

An exemplary process of deactivating a state in response to the detection of a pattern in the audio stream will now be described in more detail with reference to Figure 9. At step S9.1 a state is activated. The state may be activated as a result of a user action, a timer or the detection of a pattern matching another stored signature. The active state object contains a reference to a signature object 29 stored in memory 18 and at step S9.2 the listen manager 34 starts listening for a pattern corresponding to the stored signature object 29. While the listen manager 34 is receiving and analysing the incoming audio stream, a user inputs data using the keypad 16. The mobile telephone receives the user input at step S9.3. The user input may, as an example, be an answer to a question in a broadcast quiz show or a bet related to the performance of a player in a football match. At step S9.4, the listen manager checks whether a sample of the audio signal matches the stored signature corresponding to the signature object 29 of the active state. If not, the listen manager continues to sample and compare the audio signal with the stored signature. If there is a match between the sampled signal and the stored signature, the state is deactivated at step S9.5. No more answers, bets or other responses related to this state can now be input by the user. At step S9.6 the user input is processed by the service manager and at step S9.7 the data is sent to a server for processing and/or forwarding to a third party.

### Specific examples

The invention will now be described with respect to a number of examples of scheduled broadcast content for which services according to the invention may be provided.

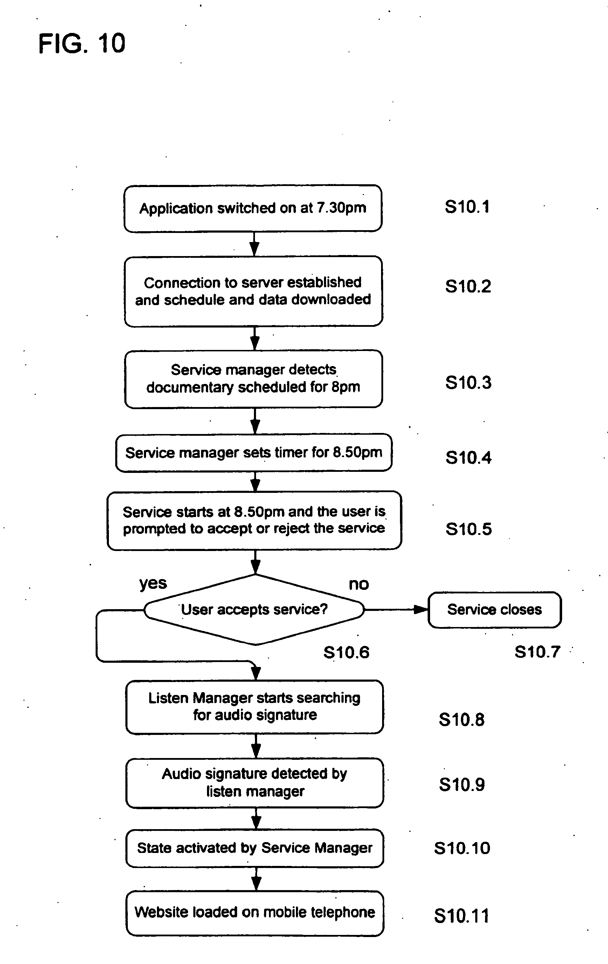

A television receiver 2 may receive a broadcast signal for a documentary about the history of Egypt. At the end of the programme, the broadcast may present information about a book about Egypt written by the presenter of the documentary for viewers who are interested in finding out more about the history of Egypt. The documentary may be scheduled to be shown between 8pm and 9pm on a Wednesday night. Referring to Figure 10, a viewer intending to watch the documentary sits down at 7.30pm and uses the soft keys 17 of his mobile phone to switch on the application, step S10.1. The mobile telephone is thereby triggered to connect to the server 3 and an up-to-date schedule of services is downloaded together with the data required to perform the services, step S10.2. The service manager 33 of the browser 31 of the application retrieves the schedule of upcoming services from memory, notes that a service associated with the documentary is scheduled at the end of the current programme, step S10.3, and sets a timer at step S10.4 for launching the browser and starting the services at ten to nine in accordance with the time data 30 supplied with the service related data.

At ten to nine, step S10.5, the service manager starts the service. At this point in time, the browser may also be automatically launched on the mobile phone. In one embodiment, the browser may launch with a pop-up window providing the viewers with a choice on whether to participate in the service or not. The pop-up window may be accompanied with a sound, which alerts the user to the fact that an input is required. The pop-up window may be provided with information about the type of the service such that the user can make an informed decision about whether he wants to receive it.

If the user decides not to receive the service at step S10.6, the service is deactivated and the browser closes at step S10.7. If the user, on the other hand, decides to receive the service at step S10.6, or if the service is provided automatically, the listen manager starts to listen for an audio pattern at step S10.8, which indicates the end of the documentary. The audio pattern may correspond to the theme music of the documentary. The data downloaded from the server indicates that the state associated with the service should be activated at the time of detecting the audio pattern. When the pattern is detected, step S10.9, the listen manager informs the service manager and the service manager activates the first state of the service at step S10.10. As a result, the application user interface loads a website for an online book shop which sells the book associated with the documentary at step S10.11. Consequently, the television displays the information about the book and at the same time, the mobile telephone displays the website for buying the book. The viewer can therefore buy the book directly by selecting the displayed link without having to remember the details on how to obtain the book until later.

The data in the state object may indicate that the state should be active until the viewer closes the browser 31, a new state associated with another service is activated or a predetermined period set by a timer expires, whichever happens first. Thus, the website may remain loaded in the browser on the mobile telephone for a period of time after the end of the broadcast.

Another example of a service according to the invention includes a service associated with a broadcast advertisement or promotion for inducing viewers to watch the advertisement. The time data 30 of the service indicates a time slightly earlier that the scheduled time of the advertisement or promotion. The browser 31 is accordingly launched at the indicated time.

Many companies develop recognisable jingles for their brands. Examples include "I'm loving it™" for McDonald's™ and "Mmm, Danone™" for Danone™. Each state object of the service associated with a commercial break may contain a reference to such a jingle stored in memory. When the listen manager 34 detects a pattern in the audio stream from the television that matches a signature referenced by a current state object, the service manager instructs the application user interface to load a website associated with the brand in the display of the mobile telephone or otherwise connect to the advertiser or promoter.

Alternatively, the service manager may instruct the application user interface to load a page, which prompts the user to press a key on the keypad in order to receive a reward for watching the advertisement, promotion or other commercial. For example, in order to induce viewers to watch an advertisement and not flick channels during the times it is broadcast, a company may offer a reward to a viewer in the form of mobile telephone credits, money, coupons etc. However, in order to ensure that the viewer actually remains near the television during the commercial, the user must press a button at some point during the advertisement to indicate his or her presence. At the end of the service, which may be at the end of the broadcast of the advertisement or at the end of a programme during a break of which the advertisement is shown, the mobile telephone submits any user input data collected during the service to the server. The collected data include any user inputs in response to the service and the viewer is rewarded accordingly. The information received from the mobile telephone may be processed and forwarded to a third party. For example, the server may check if the input for a reward was input in response to the McDonald's™ jingle or the Danone™ jingle and inform the advertisers accordingly such that the companies can be billed correctly.

Another situation in which the invention can be used involves a broadcast quiz show. Before the quiz show starts the application launches as described above. The mobile telephone subsequently connects to the server and downloads the required data for performing the service. The downloaded data may comprise one state object for each question in the quiz show. The audio track accompanying the quiz show may include a buzzer or another easily recognisable sound each time the time period for answering a question expires. A signature corresponding to the easily recognisable sound is therefore also downloaded from the server. If the questions further comprise options for answering the questions, the options and associated visual content for displaying the options on the screen 15 of the mobile telephone may be downloaded as part of the state objects.

Each state of the service is deactivated in response to the listen manager 34 detecting in the broadcast audio stream the pattern corresponding to the stored signature. After the deactivation of a state, an answer to the question cannot be entered. Consequently, a viewer cannot cheat. At the end of the programme, all the answers selected by the viewer are sent to the server for processing. The mobile telephone may regularly poll the server to download more data during the service if the service changes in response to changes in the schedule. For example, more questions than expected may be answered during a live broadcast and consequently, additional state objects need to be generated and transmitted to the mobile telephone.

A further example of a service according the invention involves a service for allowing television viewers to bet on the results of a live football game. Usually, all bets for a televised live football game have to be collected before the beginning of the broadcast of the live football game. The invention provides a method according to which viewers can continue to place bets up until the end of the game or the event for which they are betting. For example, viewers can continuously bet on who will score the next goal and at what time it will be scored. The service data downloaded from the server may comprise one state object per goal. A new state object may become active after each goal and the state may last until a footballer has scored. The end of a state may be triggered when the microphone of the mobile detects a pattern in the audio stream from the television/radio corresponding to a goal. The mobile telephone operating in accordance with the data in the state objects allows viewers to enter the bets up to the time of detecting the stored audio signatures. The data transmitted to the server at the end of the service may include the time of the bet and the bet itself and the winnings may be calculated accordingly.

A further example could take the form of a Bingo type competition. This might form part of a particular broadcast programme, or run during the commercial breaks of a broadcast channel. In any event, the user, having acquired the range of signatures and the updated Bingo 'card' from the server to be displayed on the mobile telephone, would be induced to maintain constant attention towards the broadcast. When a signature is identified from the broadcast audio stream, the browser of the mobile telephone displays a graphic associated with a unique matching event, and the user has a short period of time to click on a button on the handset to register that they were present when the matching event took place. Over a period of time, the user records a number of matching events corresponding to those referenced on the Bingo card, and if these in turn accurately map to a group of expected events, the user can instruct the mobile telephone via the application to inform the server via SMS or over GPRS that all events have been recorded. The application would, by this means, inform the server of a sequence of matching events that had been identified. If this sequence is validated by the server, the first user to have submitted a correct sequence is awarded a prize.

It should be recognised by the skilled person that although the above examples of the invention have been described with respect to a television, any type of media apparatus may be used such as a radio, stereo or a pc connected to the Internet or providing a media stream from a CD-ROM.

Moreover, the signals need not necessarily be broadcast. The service may be provided with a DVD (or UMD) of a game or quiz show.

Furthermore, although the user terminal has been described with reference to a mobile telephone handset, any type of terminal could be used, whether portable or not, hand-held or not, including but not limited to PDA devices or devices that are specially adapted to provide the features of the invention.

## Claims

1. A user device (1) for providing a service synchronised with events in an audio stream of a broadcast comprising:
means for communicating with a server over a communication network, the means for communicating being configured to receive a schedule of upcoming services related to content of a broadcast and signatures corresponding to patterns in an audio stream of said broadcast;
a microphone (7) for receiving an audio stream of a broadcast;
means (34) for searching for a pattern in the received audio stream corresponding to a stored signature in accordance with said schedule of upcoming services; and
means for executing a function in synchronisation with said broadcast in direct response to detecting the pattern, wherein the function comprises terminating a time period for a user to enter information related to broadcast content or wherein the device further comprises a timer and the function includes setting the timer.

2. A device (1) according to claim 1, wherein the audio stream is derived from a broadcast signal received by a television receiver (2).

3. A device according to claim 1 or 2, wherein the device further comprises means for polling the server for updated data at regular intervals.

4. A device (1) according to any one of the preceding claims further comprising a processor for checking the approximate start time of a broadcast associated with a service and at the start time instructing the means for searching for a pattern in the received audio stream to search for patterns that match the stored signature.

5. A device according to any one of the preceding claims, wherein the audio stream is associated with a broadcast advertisement within a commercial break.

6. A device (1) according to any one of claims 1 to 4,
wherein the audio stream is associated with a broadcast quiz show, and the function includes the termination of a time period for entering an answer to a question asked as part of the quiz show, or
wherein the audio stream is associated with a live sporting event and the function includes the termination of a time period for entering a bet on the outcome of the event.

7. A device (1) according to any one of the preceding claims further comprising means for receiving user input and means for transmitting said user input to a remote server.

8. A device (1) according to any one of the preceding claims, wherein the device is a mobile telephone.

9. A server (3) comprising
a memory (21) for storing broadcast service data including a schedule of upcoming services related to content of a broadcast and signatures corresponding to patterns in an audio stream of said broadcast;
a processor (20) for selecting data from said broadcast service data, including at least one signature of said signatures corresponding to patterns in an audio stream, for transmission to a user device (1); and
a transceiver (19) for transmitting said selected data to the user device (1) to allow the user device to execute a function upon detection of a pattern corresponding to said at least one signature in a received audio stream of a broadcast to provide a service synchronised with events in the audio stream of said broadcast as received by the user device, wherein the function comprises terminating a time period for a user to enter information related to broadcast content or wherein the device comprises a timer and the function includes setting the timer.

10. A server (3) according to claim 10, wherein the transceiver (19) is configured to transmit said selected data in response to a request from said device (1) and optionally said memory (21) is configured to store a user profile associated with said device and the processor (20) is configured to select said selected data in dependence on the user profile.

11. A system comprising:
a device according to any one of claims 1 to 8 and a server according to claim 9 or 10.

12. A computer program (23, 31) for performing a service synchronised with events in an audio stream of a broadcast, the computer program comprising instructions that when executed by a processor of a user device cause the user device to:
receive from a server over a communication network a schedule of upcoming services related to content of a broadcast and signatures corresponding to patterns in an audio stream of said broadcast;
process a received audio stream;
search for a pattern in the received audio stream corresponding to a stored signature in accordance with said schedule of upcoming services; and
execute a function in synchronisation with said broadcast in response to detecting the pattern, wherein the function comprises terminating a time period for a user to enter information related to broadcast content using the user device or wherein the device comprises a timer and the function includes setting the timer.

13. A computer program product according to claim 12, wherein the product is arranged to be downloaded from the Internet, transmitted in MMS messages from a server to a device or by Bluetooth.

14. A method for executing an application in a user device, the application being synchronised with events in an audio stream of a broadcast, the method comprising:
receiving from a server over a communication network a schedule of upcoming services related to content of a broadcast and signatures (29) corresponding to patterns in an audio stream of said broadcast;
receiving the audio stream in the device (1);
searching for a pattern in the received audio stream corresponding to a stored signature (29) in accordance with said schedule of upcoming services; and
executing a function in synchronisation with said broadcast in response to detecting the pattern, wherein the function comprises terminating a time period for a user to enter information related to broadcast content or wherein the device further comprises a timer and the function includes setting the timer.

## Patentansprüche

1. Benutzervorrichtung (1) zum Bereitstellen eines Dienstes, der mit Ereignissen in einem Audiostrom einer Ausstrahlung synchronisiert ist, umfassend:
eine Einrichtung zum Kommunizieren mit einem Server über ein Kommunikationsnetzwerk, wobei die Einrichtung zum Kommunizieren dazu konfiguriert ist, einen Plan kommender Dienste, die mit dem Inhalt einer Ausstrahlung in Bezug stehen, sowie Signaturen zu empfangen, die Mustern in einem Audiostrom der Übertragung entsprechen;
ein Mikrofon (7) zum Empfangen eines Audiostroms einer Ausstrahlung;
eine Einrichtung (34) zum Suchen nach einem Muster in dem empfangenen Audiostrom, das einer gespeicherten Signatur entspricht, in Übereinstimmung mit dem Plan kommender Dienste; und
eine Einrichtung zum Ausführen einer Funktion in Synchronisation mit der Ausstrahlung in direkter Reaktion auf das Detektieren des Musters, wobei die Funktion das Beenden der Zeitdauer für einen Benutzer umfaßt, um Informationen bezüglich ausgestrahlten Inhalts einzugeben, oder wobei die Vorrichtung ferner einen Zeitgeber umfaßt und die Funktion das Einstellen des Zeitgebers beinhaltet.

2. Vorrichtung (1) nach Anspruch 1, wobei der Audiostrom aus einem ausgestrahlten Signal abgeleitet wird, das von einem Fernsehempfänger (2) empfangen wurde.

3. Vorrichtung nach Anspruch 1 oder 2, wobei die Vorrichtung ferner eine Einrichtung zum Abfragen des Servers nach aktualisierten Daten in regelmäßigen Abständen umfaßt.

4. Vorrichtung (1) nach einem der vorhergehenden Ansprüche, ferner umfassend einen Prozessor, um die ungefähre Startzeit einer Ausstrahlung zu überprüfen, die einem Dienst zugeordnet ist, und die Einrichtung zur Startzeit zum Suchen nach einem Muster in dem empfangenen Audiostrom zu instruieren, um nach Mustern zu suchen, die der gespeicherten Signatur entsprechen.

5. Vorrichtung nach einem der vorhergehenden Ansprüche, wobei der Audiostrom einer ausgestrahlter Werbung innerhalb einer Werbepause zugeordnet ist.

6. Vorrichtung (1) nach einem der Ansprüche 1 bis 4,
wobei der Audiostrom einer ausgestrahlten Quizshow zugeordnet ist und die Funktion die Beendigung einer Zeitdauer beinhaltet, um eine Antwort auf eine als Teil der Quizshow gestellten Frage einzugeben, oder
wobei der Audiostrom einer Live-Sportveranstaltung zugeordnet ist und die Funktion das Beenden einer Zeitdauer beinhaltet, um eine Wette auf das Ergebnis der Veranstaltung abzugeben.

7. Vorrichtung (1) nach einem der vorhergehenden Ansprüche, ferner umfassend eine Einrichtung zum Empfangen einer Benutzereingabe sowie eine Einrichtung zum Übertragen der Benutzereingabe an einen Remote-Server.

8. Vorrichtung (1) nach einem der vorhergehenden Ansprüche, wobei die Vorrichtung ein Mobiltelefon ist.

9. Server (3), umfassend
einen Speicher (21) zum Speichern von ausgestrahlten Dienstdaten einschließlich eines Plans kommender Dienste, die mit dem Inhalt einer Ausstrahlung in Bezug stehen, sowie von Signaturen, die Mustern in einem Audiostrom der Ausstrahlung entsprechen;
einen Prozessor (20) zum Auswählen von Daten aus den ausgestrahlten Dienstdaten, einschließlich zumindest einer Signatur der Signaturen, die Mustern in einem Audiostrom entsprechen, zur Übertragung an eine Benutzervorrichtung (1); und
eine Sende-/Empfangseinrichtung (19) zum Übertragen der ausgewählten Daten an die Benutzervorrichtung (1), um es der Benutzervorrichtung zu ermöglichen, bei Detektion eines Musters, das der zumindest einen Signatur in einem empfangenen Audiostrom einer Ausstrahlung entspricht, eine Funktion auszuführen, um einen Dienst bereitzustellen, der mit Ereignissen in dem Audiostrom der Ausstrahlung synchronisiert ist, wie er von der Benutzervorrichtung empfangen wurde, wobei die Funktion das Beenden einer Zeitdauer für einen Benutzer umfaßt, um Informationen einzugeben, die mit ausgestrahltem Inhalt in Bezug stehen, oder wobei die Vorrichtung einen Zeitgeber umfaßt und die Funktion das Einstellen des Zeitgebers beinhaltet.

10. Server (3) nach Anspruch 10, wobei die Sende-/Empfangseinrichtung (19) dazu konfiguriert ist, die ausgewählten Daten in Reaktion auf eine Anfrage von der Vorrichtung (1) zu übertragen, und der Speicher (21) wahlweise dazu konfiguriert ist, ein Benutzerprofil zu speichern, das der Vorrichtung zugeordnet ist, und der Prozessor (20) dazu konfiguriert ist, die ausgewählten Daten in Abhängigkeit von dem Benutzerprofil auszuwählen.

11. System, umfassend:
eine Vorrichtung nach einem der Ansprüche 1 bis 8 sowie einen Server nach Anspruch 9 oder 10.

12. Computerprogramm (23, 31) zum Ausführen eines Dienstes, der mit Ereignissen in einem Audiostrom einer Ausstrahlung synchronisiert ist, wobei das Computerprogramm Instruktionen umfaßt, die, wenn sie von einem Prozessor einer Benutzervorrichtung ausgeführt werden, bewirken, dass die Benutzervorrichtung:
von einem Server über ein Kommunikationsnetzwerk einen Plan kommender Dienste, die mit dem Inhalt einer Ausstrahlung in Bezug stehen, sowie Signaturen empfängt, die Mustern in einem Audiostrom der Ausstrahlung entsprechen;
einen empfangenen Audiostrom verarbeitet;
in Übereinstimmung mit dem Plan kommender Dienste in dem empfangenen Audiostrom nach einem Muster sucht, das einer gespeicherten Signatur entspricht; und
in Reaktion auf das Detektieren des Musters eine Funktion in Synchronisation mit der Ausstrahlung ausführt, wobei die Funktion das Beenden einer Zeitdauer für einen Benutzer umfaßt, um unter Verwendung der Benutzervorrichtung Informationen einzugeben, die mit ausgestrahltem Inhalt in Bezug stehen, oder wobei die Vorrichtung einen Zeitgeber umfaßt und die Funktion das Einstellen des Zeitgebers beinhaltet.

13. Computerprogrammprodukt nach Anspruch 12, wobei das Produkt dazu ausgelegt ist, aus dem Internet heruntergeladen, in MMS-Nachrichten von einem Server zu einer Vorrichtung oder mittels Bluetooth übertragen zu werden.

14. Verfahren zur Ausführung einer Anwendung in einer Benutzervorrichtung, wobei die Anwendung mit Ereignissen in einem Audiostrom einer Ausstrahlung synchronisiert ist, wobei das Verfahren umfaßt:
Empfangen eines Plans kommender Dienste, die mit Inhalt einer Ausstrahlung in Bezug stehen, sowie von Signaturen (29), die Mustern in einem Audiostrom der Ausstrahlung entsprechen, von einem Server über ein Kommunikationsnetzwerk;
Empfangen des Audiostroms in der Vorrichtung (1);
Suchen nach einem Muster in dem empfangenen Audiostrom, das einer gespeicherten Signatur (29) entspricht, in Übereinstimmung mit dem Plan kommender Dienste; und
Ausführen einer Funktion in Synchronisation mit der Ausstrahlung in Reaktion auf das Detektieren des Musters, wobei die Funktion das Beenden einer Zeitdauer für einen Benutzer umfaßt, um Information einzugeben, die in Bezug zu ausgestrahltem Inhalt stehen, oder wobei die Vorrichtung ferner einen Zeitgeber umfaßt und die Funktion das Einstellen des Zeitgebers beinhaltet.

## Revendications

1. Dispositif d'utilisateur (1) pour fournir un service synchronisé avec des événements dans un flux audio d'une diffusion, comprenant :
des moyens pour communiquer avec un serveur sur un réseau de communication, les moyens pour communiquer étant configurés pour recevoir un calendrier de services à venir en relation avec le contenu d'une diffusion et des signatures correspondant à des motifs dans un flux audio de ladite diffusion ;
un microphone (7) pour recevoir un flux audio d'une diffusion ;
des moyens (34) pour rechercher un motif dans le flux audio reçu correspondant à une signature mémorisée conformément audit calendrier de services à venir ; et
des moyens pour exécuter une fonction en synchronisation avec ladite diffusion en réponse directe à la détection du motif, dans lequel la fonction comprend la terminaison d'une période de temps pour qu'un utilisateur entre des informations en relation avec le contenu de diffusion, ou dans lequel le dispositif comprend en outre un registre d'horloge et la fonction comprend le paramétrage du registre d'horloge.

2. Dispositif (1) selon la revendication 1, dans lequel le flux audio est déduit d'un signal de diffusion reçu par un récepteur de télévision (2).

3. Dispositif selon la revendication 1 ou 2, dans lequel le dispositif comprend en outre des moyens pour interroger le serveur quant à des données mises à jour à des intervalles réguliers.

4. Dispositif (1) selon l'une quelconque des revendications précédentes, comprenant en outre un processeur pour contrôler l'instant de début approximatif d'une diffusion associée à un service et, à l'instant de début, demander aux moyens de recherche d'un motif dans le flux audio reçu de rechercher des motifs qui correspondent à la signature mémorisée.

5. Dispositif selon l'une quelconque des revendications précédentes, dans lequel le flux audio est associé à une publicité diffusée dans un créneau publicitaire.

6. Dispositif (1) selon l'une quelconque des revendications 1 à 4,
dans lequel le flux audio est associé à un jeu diffusé, et la fonction comprend la terminaison d'une période de temps pour l'entrée d'une réponse à une question posée en tant que partie du jeu, ou
dans lequel le flux audio est associé à un événement sportif en direct et la fonction comprend la terminaison d'une période de temps pour l'entrée d'un pari sur le résultat de l'événement.

7. Dispositif (1) selon l'une quelconque des revendications précédentes, comprenant en outre des moyens pour recevoir une entrée d'utilisateur et des moyens pour transmettre ladite entrée d'utilisateur à un serveur à distance.

8. Dispositif (1) selon l'une quelconque des revendications précédentes, dans lequel le dispositif est un téléphone mobile.

9. Serveur (3) comprenant :
une mémoire (21) pour mémoriser des données de services de diffusion comprenant un calendrier de services à venir en relation avec le contenu d'une diffusion et des signatures correspondant à des motifs dans un flux audio de ladite diffusion ;
un processeur (20) pour sélectionner des données parmi lesdites données de services de diffusion, comprenant au moins une signature parmi lesdites signatures correspondant à des motifs dans un flux audio, pour transmission à un dispositif d'utilisateur (1) ; et
un émetteur-récepteur (19) pour transmettre lesdites données sélectionnées au dispositif d'utilisateur (1) pour permettre au dispositif d'utilisateur d'exécuter une fonction lors de la détection d'un motif correspondant à ladite au moins une signature dans un flux audio reçu d'une diffusion pour fournir un service synchronisé avec des événements dans le flux audio de ladite diffusion telle que reçue par le dispositif d'utilisateur, dans lequel la fonction comprend la terminaison d'une période de temps pour qu'un utilisateur entre des informations en relation avec le contenu de diffusion, dans lequel le dispositif comprend un registre d'horloge et la fonction comprend le paramétrage du registre d'horloge.

10. Serveur (3) selon la revendication 9, dans lequel l'émetteur-récepteur (19) est configuré pour transmettre lesdites données sélectionnées en réponse à une demande dudit dispositif (1) et, optionnellement, ladite mémoire (21) est configurée pour mémoriser un profil d'utilisateur associé audit dispositif et le processeur (20) est configuré pour sélectionner lesdites données sélectionnées en fonction du profil d'utilisateur.

11. Système comprenant :
un dispositif selon l'une quelconque des revendications 1 à 8 et un serveur selon la revendication 9 ou 10.

12. Programme d'ordinateur (23, 31) pour effectuer un service synchronisé avec des événements dans un flux audio d'une diffusion, le programme d'ordinateur comprenant des instructions qui, lorsqu'elles sont exécutées par un processeur d'un dispositif d'utilisateur, amènent le dispositif d'utilisateur à :
recevoir, d'un serveur sur un réseau de communication, un calendrier de services à venir en relation avec le contenu d'une diffusion et des signatures correspondant à des motifs dans un flux audio de ladite diffusion ;
traiter un flux audio reçu ;
rechercher un motif dans le flux audio reçu correspondant à une signature mémorisée conformément audit calendrier de services à venir ; et
exécuter une fonction en synchronisation avec ladite diffusion en réponse à la détection du motif, dans lequel la fonction comprend la terminaison d'une période de temps pour qu'un utilisateur entre des informations en relation avec le contenu de diffusion en utilisant le dispositif d'utilisateur, ou dans lequel le dispositif comprend un registre d'horloge et la fonction comprend le paramétrage du registre d'horloge.

13. Produit-programme d'ordinateur selon la revendication 12, dans lequel le produit est agencé pour être téléchargé à partir d'Internet, transmis dans des messages MMS d'un serveur à un dispositif ou par Bluetooth.

14. Procédé pour exécuter une application dans un dispositif d'utilisateur, l'application étant synchronisée avec des événements dans un flux audio d'une diffusion, le procédé consistant à :
recevoir, d'un serveur sur un réseau de communication, un calendrier de services à venir en relation avec le contenu d'une diffusion et des signatures (29) correspondant à des motifs dans un flux audio de ladite diffusion ;
recevoir le flux audio dans le dispositif (1) ;
rechercher un motif dans le flux audio reçu correspondant à une signature (29) mémorisée conformément audit calendrier de services à venir ; et
exécuter une fonction en synchronisation avec ladite diffusion en réponse à la détection du motif, dans lequel la fonction comprend la terminaison d'une période de temps pour qu'un utilisateur entre des informations en relation avec le contenu de diffusion, ou dans lequel le dispositif comprend en outre un registre d'horloge et la fonction comprend le paramétrage du registre d'horloge.
